# EUROPEAN PATENT SPECIFICATION

(11) **EP 2 539 139 B1**
(45) Date of publication and mention of the grant of the patent: **20.04.2016**
(21) Application number: 11713045.0
(22) Date of filing: 21.02.2011
(51) Int. Cl.: B29D 30/00, B29C 37/00

(54) **PROCESS AND APPARATUS FOR UNWINDING AN ELONGATED ELEMENT PROVIDED WITH TWO SERVICE FABRICS IN ORDER TO BUILD TYRES FOR VEHICLE WHEELS**
VERFAHREN UND VORRICHTUNG ZUR ABWICKLUNG EINES VERLÄNGERTEN ELEMENTS MIT ZWEI GEWEBEN ZUR HERSTELLUNG VON REIFEN FÜR FAHRZEUGRÄDER
PROCÉDÉ ET DISPOSITIF PERMETTANT DE DÉROULER UN ÉLÉMENT ALLONGÉ POURVU DE DEUX TISSUS DE SERVICE AFIN DE FABRIQUER DES PNEUS POUR DES ROUES DE VÉHICULE

(30) Priority: 24.02.2010 US 307567 P; 22.02.2010 IT MI20100270
(43) Date of publication of application: 02.01.2013
(73) Proprietor: Pirelli Tyre S.p.A., 20126 Milano (IT)
(72) Inventor: PORTINARI, Gianni, I-20126 Milano (IT); STEGAGNO, Francesco, I-37124 Verona (IT); DALE', Pietro, I-20126 Milano (IT)
(74) Representative: Castiglia, Paolo
(86) International application number: PCT/IB2011/000372
(87) International publication number: WO 2011/101738

(56) References cited:
- EP-A1- 0 621 124
- WO-A1-01/45923
- WO-A1-02/053356
- US-A- 2 653 885
- US-A- 3 546 042
- US-A- 4 170 504
- US-A- 4 951 892
- US-A- 5 756 214

## Description

The present invention relates to a process and an apparatus for unwinding an elongated element provided with two service fabrics in order to build tyres for vehicle wheels.

The present invention also relates to a process and a plant for building tyres for vehicle wheels.

The elongated element of the present invention is, in particular, an element made of elastomeric material obtained for example through a conventional drawing process. Such an elongated element is intended to be used in a process for building at least one portion of a tyre for vehicle wheels, in particular to make the sidewalls and/or the tread band and/or other components of the tyre made of elastomeric material.

Throughout the present description and in the subsequent claims, "elongated element" is used to indicate an element made of elastomeric material having a prevalent extension along a longitudinal direction thereof. Such an elongated element preferably consists of elastomeric material only, but it can also comprise textile or metallic reinforcing cords incorporated into a matrix of elastomeric material.

Throughout the present description and in the subsequent claims, the expression "base surface" of the elongated element is used to indicate the radially outer surface of each turn of elongated element when it is wound on the storage coil in the clockwise direction, or the radially inner surface of each turn of elongated element when it is wound on the storage coil in the anti-clockwise direction for an observer in the same position. Such a base surface corresponds to the lower surface of the elongated element once it is unwound from the storage coil and arranged on a substantially horizontal plane.

The expression "top surface" of the elongated element, on the other hand, is used to indicate the radially inner surface of each turn of elongated element when it is wound on the storage coil in the clockwise direction, or the radially outer surface of each turn of elongated element when it is wound on the storage coil in the anti-clockwise direction for an observer in the same position. Such a top surface corresponds to the upper surface of the elongated element once it is unwound from the storage coil and arranged on a substantially horizontal plane.

In the applications presently known to the Applicant the aforementioned elongated element is provided with a single service fabric that, typically, is associated with the base surface of the elongated element itself.

In view of the final use thereof, the elongated element is wound onto a storage coil simultaneously with the service fabric. Such winding typically occurs in line with the drawing process of the elongated element.

The service fabric is adapted both to avoid the turns of elongated element wound on the collecting coil from sticking together, and to give the elongated element a desired structural consistency when it is wound on the storage coil.

WO 01/45923, to the same Applicant, relates to a method for removing a support fabric from a substantially elongated element of elastomeric material with which it is associated, before transferring said elongated element to a drum for building a tyre. The method comprises the steps of automatically detaching the support fabric from the elongated element and, at the same time, moving said elongated element towards a feeding device arranged upstream of said building drum in order to carry out said transfer.

Other processes and apparatuses for removing a single separator cloth from a rubber strip wound on a storage reel, before using the strip on a tire building machine, and collecting the separator cloth on a collecting core , are disclosed in US 4170504 - A, US 3546042 - A, EP 621124 - A and US 4951892 - A.

Document US 2653885 - A discloses a rubber material supported by a substrate consisting of a laminate comprising a sheeted nylon layer and a paper sheet.
The rubber material is stored on an arbor.
When needed, the paper layer and the nylon layer can be stripped from the rubber material, which can be employed for further use.

Document WO 02/0533567 - A discloses a method of unwinding an elongated element, in order to build one portion of a tyre, said elongated element being provided with a first service fabric and a second service fabric and being arranged wound on a first storage coil, the process comprising the steps of :
- unwinding the elongated element from the first storage coil;
- removing the first service fabric and the second service fabric from the elongated element;
- collecting each of said first service fabric and second service fabric on a first collecting member and on a second collecting member, respectively;
- wherein the removal and collection of said first service fabric and second service fabric occur during the unwinding of the elongated element from the first storage coil;
- wherein removing the second service fabric comprises arranging a wedge-shaped element at an operative position in which it contacts the second service fabric.
An apparatus suitable for carrying out this process is also disclosed therein.

The Applicant has observed that a method for detaching a support or service fabric from an elongated element made of elastomeric material of the type illustrated in WO 01/45923 cannot be applied in processes for building tyres, when it is foreseen the use of semifinished products in the form of elongated elements having two service fabrics, more specifically when said elongated elements have a first service fabric applied onto a base surface and a second service fabric applied onto a top surface of the same elongated elements.

The Applicant has perceived in this circumstance that the technical need to remove both of the service fabrics before using each elongated element on a forming drum must occur in the shortest time possible, so as to reduce as much as possible the unwinding time of the elongated element itself and consequently the building time of a tyre using such an elongated element. Indeed, the feeding of such a type of semifinished product should in no way modify the productivity of the tyre building plant, irrespective of the component of the tyre using such a semifinished product.

The Applicant has also realised that it would be particularly advantageous to foresee, for each of the two service fabrics, a possible subsequent use which is different from the use foreseen for the other service fabric. This feature could lead to a greater technological flexibility of the plant itself, since a service fabric firstly used for a certain semifinished product can subsequently be used for a different semifinished product according to the requirements of the moment.

The Applicant has finally found that, in a process for building tyres wherein during building it is foreseen to feed an elongated element having a first service fabric and a second service fabric onto a forming drum, collecting each of the two service fabrics on a specific and distinct collecting member during the unwinding of the elongated element from a storage coil, it is advantageously possible both to carry out the aforementioned operation in times such as to leave the production rate unchanged and to reuse or dispose of each of the two service fabrics irrespective of what will be done with the other service fabric. All of this without the collection of the two service fabrics taking up an additional amount of time with respect to what is necessary in order to unwind the elongated element from the storage coil.

The present invention therefore relates, in a first aspect thereof, to a process for unwinding an elongated element according to claim 1. service fabrics, so that each of the two service fabrics can be reused or disposed of separately and independently from the other. The collection of the two service fabrics is also advantageously carried out in the same period of time in which the unwinding of the elongated element is carried out, thus without altering the production downstream of the aforementioned unwinding.

After all, an advantageous flexibility and cost-effectiveness of the process is obtained.

In a second aspect thereof, the present invention relates to an apparatus for unwinding an elongated element according to claim 16.

In a third aspect thereof, the present invention relates to a process for building types according to claim 15.

In a fourth aspect thereof, the present invention relates to a plant for building types according to claim 25.

Preferred embodiments of the invention are defined in the remaining dependent claims.

The present invention, in at least one of the above aspects thereof, can comprise at least one of the following preferred features, taken individually or in combination with the others.

Preferably, the unwinding of the elongated element occurs as a result of a pulling action exerted on said first service fabric. There is thus no need to provide for driving members associated with the storage coil and adapted to drive its rotation for the unwinding of the elongated element.

In preferred embodiments of the present invention, said first service fabric is associated with a base surface of said elongated element.

Advantageously, the provision of a first service fabric on the base surface of the elongated element provides the elongated element itself with a desired structural consistency, thus avoiding such an elongated element from losing its structure, and thus deforming, during the winding onto, or unwinding from, the storage coil, and/or during the storage in a coil outside of the production line.

Preferably, said second service fabric is associated with a top surface of said elongated element.

Advantageously, the provision of a second service fabric on the top surface of the elongated element allows an easier handling of the elongated element, which typically consists of sticky elastomeric material, and makes it possible to avoid the various turns of elongated element wound on the storage coil being able to stick together because of such a stickiness.

In preferred embodiments of the present invention, said first collecting member is motorized.

Preferably, said pulling action is exerted by driving said first collecting member in rotation. The motorization of the first collecting member thus allows the elongated element to be automatically unwound from the storage coil and the first service fabric to be automatically wound on the first collecting member.

Preferably, the removal of said first service fabric comprises:
- associating a head end of said first service fabric with said first collecting member;
- driving said first collecting member in rotation.

In particularly preferred embodiments of the present invention, during the unwinding of said elongated element the passage of a tail end of said elongated element is detected. Advantageously, such detection is very useful in the control operations of the unwinding process.

Preferably, the invention provides for stopping said first collecting member after a predetermined time from said detection. Advantageously, such a provision makes it possible to automatically manage the completion of the winding of the two service fabrics on the respective collection members.

In particularly preferred embodiments of the present invention, said second collecting member is not coaxial to said first collecting member. The two collecting members are thus physically distinct from one another and arranged differently in the work station where the unwinding is carried out. They can thus be handled independently from one another.

Preferably, said second collecting member is motorized. The motorization of the second collecting member advantageously allows the automatic winding of the second service fabric on the second collecting member.

More preferably, the removal of said second service fabric comprises:
- associating a head end of said second service fabric with said second collecting member;
- driving said second collecting member in rotation.

Preferably, the head end of each of said first service fabric and second service fabric is manually pulled up to the respective first collecting member and second collecting member, for being associated with said first collecting member and second collecting member, respectively. In this way the initial coupling of the two service fabrics on the respective collecting members is obtained, so as to be able then to automatically proceed with the unwinding of the elongated element, the removal of the two service fabrics and the winding of such service fabrics on the respective collecting members.

In particularly preferred embodiments of the present invention, the removal of at least one of said first service fabric and second service fabric comprises guiding said first service fabric and second service fabric towards said first collecting member and second collecting member.

Preferably, the unwinding of said elongated element from said first storage coil further comprises exerting a braking action on said first storage coil. This is in order to ensure a sufficient tensioning of the elongated element during unwinding, so as to make both the removal of the service fabrics and the winding thereof on the respective collecting members easier and more effective.

In a first embodiment of the present invention, said braking action is exerted by imparting a torque to said first storage coil in an direction opposite to that of unwinding.

In particularly preferred embodiments of the present invention the unwinding of the elongated element from said first storage coil comprises detecting the height at which the portion of elongated element from which the first service fabric and the second service fabric have been removed is.

Preferably, the unwinding of the elongated element from said first storage coil further comprises stopping the unwinding of said elongated element when said height reaches a lower threshold value. This makes it possible for the festoon of elongated element that is generated downstream of the work station in which the unwinding and the collection of the service fabrics on the respective collecting members is carried out to maintain a minimum height from the floor such as to ensure a sufficient accumulation of elongated element for feeding to the subsequent tyre building process, without risking that such an elongated element comes into contact with possible members or elements arranged on the floor at the aforementioned work station.

More preferably, the present invention further comprises: restarting the unwinding of said elongated element when said height reaches a higher threshold value. This makes it possible to avoid the aforementioned festoon of elongated element exceeding a height from the floor beyond which it is no longer possible to ensure a sufficient accumulation of elongated element for the subsequent tyre building process.

In particularly preferred embodiments of the present invention, the unwinding of the elongated element from said first storage coil comprises detecting the linear unwinding speed of said elongated element. Advantageously, such a parameter is useful in the control operations of the unwinding process.

Preferably, the present invention comprises:
- positioning a second storage coil of a further elongated element in line with a further collecting member, with respect to the unwinding direction of said further elongated element, said further elongated element being provided with said first service fabric and second service fabric, said further collecting member being adapted to collect the first service fabric of said further elongated element.

Even more preferably, the positioning of said second storage coil occurs during the unwinding of the elongated element from said first storage coil.

The Applicant has perceived the need of eliminating, or at least reducing to the minimum, the loading/unloading times of the storage coil and/or of the collecting members of the service fabrics. Such times indeed constitute in every sense idle time in the tyre building process in which the elongated element described above is used.

In this respect, the Applicant has realised that by carrying out the loading/unloading of the storage coil of the elongated element and/or of the collecting members of the service fabrics during the operations of unwinding of the elongated element from another storage coil and of collecting the service fabrics of such an elongated element on specific and distinct further collecting members, it is possible to considerably reduce the overall time of the aforementioned building process.

More preferably, the present invention comprises, at the end of the unwinding of the elongated element from said first storage coil:
- moving said first storage coil and said first collecting member along a direction perpendicular to the unwinding direction;
- moving said second storage coil and said further collecting member to the position previously occupied by said first storage coil and said first collecting member.

Preferably, the movement of said first storage coil and said first collecting member occurs during the movement of said second storage coil and said further collecting member.

Advantageously, in this way it is possible to reduce to the minimum the loading/unloading times of the storage coil and/or of the collecting members of the service fabrics. Such times constitute in every sense idle times in the tyre building process, and it is thus highly desired to be able to reduce them so as to obtain an advantageous flexibility and cost-effectiveness of the process.

Preferably, the present invention comprises, at the end of the unwinding of said elongated element from said first storage coil:
- unwinding said further elongated element from said second storage coil;
- removing said first service fabric and second service fabric from said further elongated element by collecting them on said further collecting member and on said second collecting member, respectively.

Even more preferably, the removal of said first service fabric and second service fabric from said further elongated element occurs during the unwinding of said further elongated element from said second storage coil.

Preferably, the present invention further comprises taking said first storage coil and said first collecting member, wherein said taking occurs during the unwinding of said further elongated element from said second storage coil.

In the preferred embodiments of the present invention, said first collecting member and second collecting member have respective rotation axes arranged in parallel. This makes easier both the assembly operations and the disassembly and/or maintenance operations.

Preferably, said first collecting member is removably associated with a support structure. It is thus possible, at the end of the unwinding, to take the first collecting member on which the first service fabric has been collected and replace it with another empty collecting member, so as to proceed with the unwinding of a new elongated element and the removal of the first service fabric from the first collecting member. Such a service fabric can be recycled, or possibly disposed of, separately from the second service fabric.

Preferably, said second collecting member is removably associated with a support structure. It is thus possible, at the end of the unwinding, to take the second collecting member on which the second service fabric has been collected and replace it with another empty collecting member, so as to proceed with the unwinding of a new elongated element and the removal of the second service fabric from the second collecting member. Such a service fabric can be recycled or disposed of separately from the first service fabric.

Advantageously, the service fabric applied on the base surface of the elongated element is reused, whereas the service fabric applied on the top surface of the elongated element is disposed of since very often it has been deteriorated by the contact with the sticky material of which the elongated element consists.

Preferably, at least one first roll for deviating said first service fabric is operatively arranged between said first storage coil and said first collecting member. Such a roll, advantageously, directs the first service fabric towards the first collecting member once such a service fabric has been detached from the elongated element.

Preferably, at least one second roll for deviating said second service fabric is operatively arranged between said first storage coil and said second collecting member. Such a roll, advantageously, directs the second service fabric towards the second collecting member once such a service fabric has been detached from the elongated element.

Preferably, the invention provides for the use of at least one guide member for guiding at least one of said first service fabric and second service fabric on at least one of said first collecting member and second collecting member.

In a preferred embodiment of the present invention, said at least one guide member comprises a wedge-shaped element which can be moved between a rest position in which said wedge-shaped element is arranged so as not to be in contact with the elongated element during its movement between said first storage coil and at least one of said first collecting member and second collecting member and an operative position in which said wedge-shaped element is arranged so as to be in contact with said elongated element. Advantageously, such a wedge-shaped element performs the dual function of keeping the elongated element in position before the detachment of at least one of the first service fabric and the second service fabric and, as soon as such detachment has taken place, directing said at least one of the first service fabric and the second service fabric towards the respective collecting member.

Preferably, the invention comprises at least one pressing member acting on at least one of said first collecting member and second collecting member. Such a pressing member allows an optimal winding of the service fabric on the respective collecting member to be carried out.

Preferably, said at least one pressing member can be moved between a rest position in which it is arranged so as not to act against said at least one of said first collecting member and second collecting member and an operative position in which said pressing member is arranged so as to thrust against said at least one of said first collecting member and second collecting member. The pressing member can thus be moved to allow the assembly and disassembly of the collecting member. Once brought into the operative position, the pressing member exerts its pressing action on the service fabric being collected on the collecting member.

In preferred embodiments of the present invention, it is foreseen to use a device for detecting the height at which the portion of elongated element from which the first service fabric and the second service fabric have been removed is.

Preferably, it is foreseen to use a first device for detecting a minimum desired height.

More preferably, it is foreseen to use a second device for detecting a maximum desired height.

Advantageously, the aforementioned detection devices allow the current height of the festoon of elongated element deprived of the two service fabrics to be kept under control, thus being able to ensure that such a height is kept within a range of desired values defined between a minimum height and a maximum height.

Preferably, it is then foreseen to use an operation and control unit of the unwinding of said elongated element, said operation and control unit being operatively associated with said at least one detection device. Advantageously, the aforementioned unit commands the interruption of the unwinding when the position of the festoon is too low and the restarting of the unwinding when the position of the festoon is too high.

Preferably, an encoder is arranged downstream of said first storage coil, said encoder being adapted to detect the linear unwinding speed of said elongated element.

In particularly preferred embodiments of the present invention, said first storage coil, said first collecting member and said second collecting member are arranged in line with respect to the unwinding direction of said elongated element and said first storage coil and said first collecting member are mounted on a carriage that can be moved perpendicular to the unwinding direction of said elongated element. Advantageously, it is thus possible to move the storage coil and the first collecting member from the position in which the unwinding is carried out to a position in which the loading/unloading is carried out.

Preferably, said carriage comprises:
- a second storage coil mounted on said carriage on a side of said first storage coil;
- a further collecting member mounted on said carriage on a side of said first collecting member. Advantageously, the movement of the aforementioned carriage allows the aforementioned second storage coil and the aforementioned further collecting member to be moved to take the place of the first storage coil and of the first collecting member, so as to be able to carry out the unwinding of the elongated element wound on the second storage coil.

Further characteristics and advantages of the present invention will become clearer from the following detailed description of some embodiments thereof, made with reference to the attached drawings. In such drawings:
- figure 1 is a schematic side view of a first embodiment of an apparatus belonging to the plant in accordance with the present invention;
- figure 2 is a schematic perspective view of a portion of an embodiment of an elongated element used in the present invention, in which the various constituent elements of said elongated element are illustrated in a partially mutually detached condition;
- figure 3 is a schematic view of a cross section of the element of figure 2, such a section being taken at the line I-I;
- figure 4 is a section view, consistent with that of figure 3, of an alternative embodiment of an elongated element used in the present invention, in the operative configuration taken by such an elongated element when wound on a respective collecting member;
- figure 5 is a schematic side view of a second embodiment of an apparatus belonging to the plant in accordance with the present invention;
- figure 6 is a schematic view from above of a portion of the apparatus of figure 5.

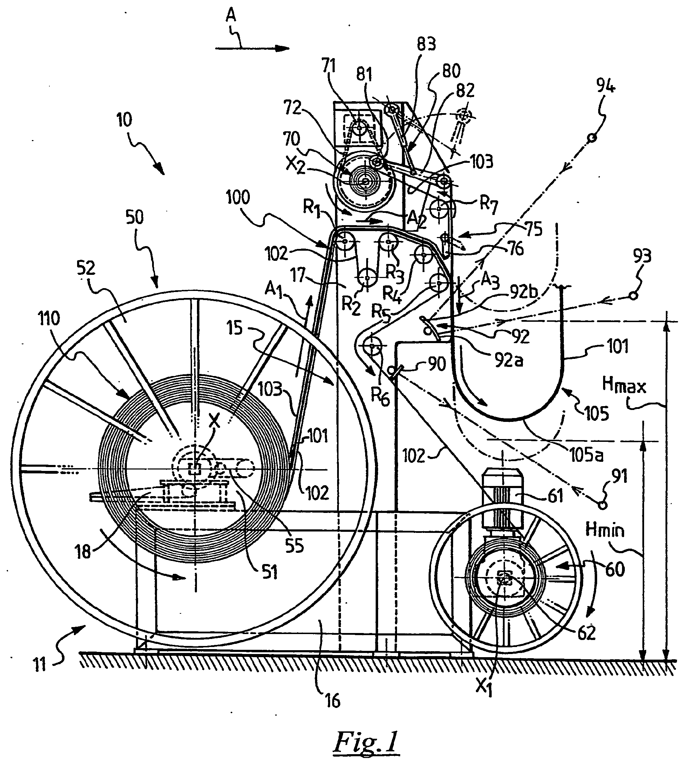

In figure 1, reference numeral 10 wholly indicates an example embodiment of a first embodiment of an apparatus for unwinding an elongated element 100 that, as better described hereafter and in accordance with the present invention, is provided with two service fabrics.

The apparatus 10 is used, in particular, in a plant that carries out a process for building tyres for vehicle wheels, in association with at least one work station 11 (not illustrated in detail). Such a work station 11 is adapted in particular to make the sidewalls, and/or the tread band, and/or other components of the tyre made of elastomeric material.

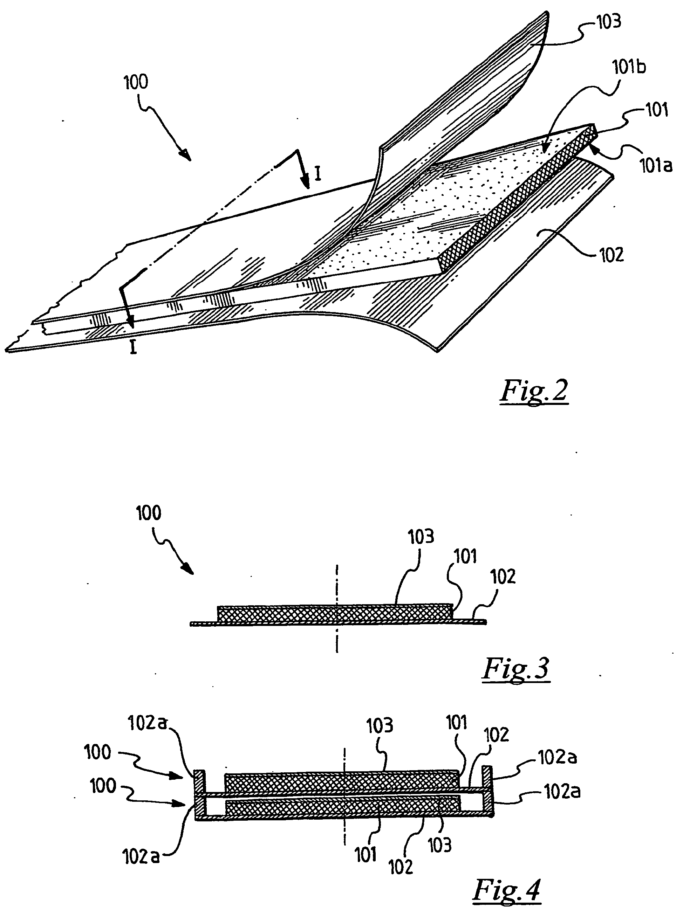

A portion of the elongated element 100 used in the present invention is illustrated in figure 2 and a cross section thereof is illustrated in figure 3.

As illustrated in such figures, the elongated element 100 comprises an element made of elastomeric material 101, a first service fabric 102 applied on a base surface 101a of the aforementioned element made of elastomeric material 101 and a second service fabric 103 applied on a top surface 101b of the aforementioned element made of elastomeric material 101.

The use of the first service fabric 102 on the base surface 101a of the element made of elastomeric material 101 is for example due to the need to provide the element made of elastomeric material 101 with a desired structural consistency. The use of the second service fabric 103 on the top surface 101b of the element made of elastomeric material 101 is for example due to the high surface stickiness provided to the element made of elastomeric material 101 by the particular elastomeric material which it consists of.

The element made of elastomeric material 101 is for example obtained through a conventional drawing process. The service fabrics 102, 103, are both of the conventional type, like for example polythene, nylon, Mylar®, polyester, Meraklon®.

In view of its use in the aforementioned plant, the elongated element 100 thus made is wound on a storage coil 50, illustrated in figure 1.

For its final use, the elongated element 100 must be unwound from the storage coil 50 and removed of the two service fabrics 102 and 103. During the unwinding of the elongated element 100, each of the two service fabrics 102, 103 is wound on a respective collecting member, as will become clear in the rest of the present description.

The elongated element 100 preferably has a minimum thickness of 2 mm, more preferably between 2 mm and 15 mm, and a width preferably between 60 mm and 400 mm.

Figure 1 shows the apparatus 10 according to the present invention during the unwinding process of the elongated element 100 that gives rise to the feeding of said elongated element 100 in said work station 11 to build at least one portion of tyre with the aforementioned elongated element 100.

In the apparatus 10 operatively associated with said work station 11, the elongated element 100 is unwound from the storage coil 50 and, during such unwinding, the service fabrics 102 and 103 are removed and subjected to a differentiated collection on the respective collecting members.

The apparatus 10 comprises a support structure 15 provided with a base 16 and at least one upright 17.

A skid 18 adapted to facilitate the positioning of the storage coil 50 in the work position and the removal of such a storage coil 50 at the end of the unwinding process is provided on the base 16.

The storage coil 50 is removably mounted on the base 16. It comprises a central core 51 on which the elongated element 100 is wound to form a plurality of overlapped turns (indicated in figure 1 with 110). A pair of flanges 52, only one of which is shown in figure 1, are associated with the opposite ends of the central core 51.

The storage coil 50 can rotate around a rotation axis X, whose trace is visible in figure 1. The rotation of the storage coil 50 around the axis X is obtained through a pulling action exerted on the elongated element 100. Such a rotation allows the unwinding of the elongated element 100, as will be described hereafter.

A braking device 55 acts on the storage coil 50. Such a device imparts a torque on the storage coil 50 in a direction opposite to that of unwinding.

As already stated, each of the two service fabrics 102, 103, once removed from the elongated element 100, is wound on a respective collecting member. The apparatus 10 in particular comprises a first collecting member 60 of the first service fabric 102 and a second collecting member 70 of the second service fabric 103. Such collecting members consist, in particular, of respective coils which can rotate around respective rotation axes X₁ and X₂. Such coils are of a similar type to the storage coil 50, but are small in size.

The collecting members 60 and 70 are arranged in line with the storage coil 50 with respect to the unwinding direction of the elongated element 100. Such a direction is generically and schematically indicated with A in figure 1 and is defined by the sequence of the lines A1, A2 and A3.

As illustrated in figure 1, the first collecting member 60 of the first service fabric 102 is rotatably and removably mounted on the base 16 of the apparatus 10, with its axis X₁ parallel to the axis X of the storage coil 50. The second collecting member 70 of the second service fabric 103 is rotatably and removably mounted at an upper end of the upright 17 of the apparatus 10 and also has an axis X₂ parallel to the axis X of the storage coil 50.

The first collecting member 60 can be set in rotation through a motor group 61. For this purpose, the first collecting member 60 is fitted coaxially on an motion output shaft 62 of the motor group 61. In figure 1 it is possible to see the trace of such a shaft 62.

The second collecting member 70 can be set in rotation through a different motor group. In figure 1 it is possible to see the trace of the motion output shaft 71 of such a motor group. The motion is then transferred to the collecting member 70 through a belt 72.

An operation and control unit (not illustrated) provided with a proper microprocessor drives with a controlled torque the motor group that sets the second collecting member 70 in rotation. The speed of the aforementioned motor group is set by the speed of the motor group 61.

The unwinding of the elongated element 100 from the storage coil 50 occurs as a result of the pulling exerted by the first collecting member 60 on the first service fabric 102. The winding of the first service fabric 102 on the first collecting member 60 therefore occurs simultaneously with the unwinding of the elongated element 100.

In embodiment thereof illustrated in figure 1, the apparatus 10 comprises a plurality of rolls R₁-R₆ all mounted on the upright 17 of the support structure 15 with respective rotation axes parallel to the axes X, X₁ and X₂. They are operatively arranged between the storage coil 50 and the first collecting member 60 with respect to the path travelled by the first service fabric 102 during the unwinding of the elongated element 100 from the storage coil 50. The aforementioned rolls R₁-R₆ are thus adapted to deviate the first service fabric 102 towards the first collecting member 60.

The rolls R₁-R₆ are arranged above the first collecting member 60 and under the second collecting member 70. The roll R₂ is arranged at a lower height with respect to that of the adjacent rolls R₁ and R₃.

During the unwinding of the elongated element 100, the first service fabric 102 detaches from the element made of elastomeric material 101 at the roll R₁, deviates downwards to pass onto the roll R₂ and from here goes back up to pass onto the roll R₃, then it proceeds onto the rolls R₄ and R₅ and from here towards the roll R₆, from which it is finally deviated towards the first collecting member 60.

The roll R₆ is arranged at a lower height with respect to that of the roll R₅. Moreover, taking as a reference a vertical plane passing through the centre of the roll R₅, the roll R₆ is arranged on the opposite side to that in which the axis X₁ of the first collecting member 60 is arranged. The position of the roll R₆ with respect to the roll R₅ and to the first collecting member 60 is such as to give the first service fabric 102 a desired tension.

Advantageously, the provision of the roll R₆ also avoids the interference between the first service fabric 102 and the mirrors 90 and 92 that are described hereafter.

Of course, the arrangement of the rolls R₁-R₆ can be different from the one described above, but in any case such as to perform the aforementioned function.

The apparatus 10 further comprises a roll R₇ adapted to cooperate with at least some of the rolls R₁-R₆ described above to deviate the second service fabric 103 towards the second collecting member 70. Such a roll R₇ is thus operatively arranged between the storage coil 50 and the second collecting member 70 with respect to the path travelled by the second service fabric 103 during the unwinding of the elongated element 100 from the storage coil 50.

The roll R₇ is also mounted on the upright 17 of the support structure 15, with the respective rotation axis parallel to the axes X, X₁ and X₂. Such a roll R₇ is arranged above the rolls R₁-R₆.

During the unwinding of the elongated element 100, the second service fabric 103 passes, together with the element made of elastomeric material 101 on which it is applied, over the rolls R₁, R₃ and R₄, detaches from the element made of elastomeric material 101 downstream of the roll R₄, then deviates upwards to pass onto the roll R₇, from which it is finally deviated towards the second collecting member 70.

In the particular embodiment illustrated in figure 1, the elongated element 100 passes over the rolls R₁, R₃, R₄ and R₅. Downstream of the roll R₅ the elongated element 100 does not have either of the service fabrics 102, 103; it thus consists of just the element made of elastomeric material 101. Such an element made of elastomeric material 101 is collected in a conventional manner to form a festoon 105 intended to act as a storage unit for the tyre building process.

The rolls R₁, R₃, R₄ and R₅ basically support the elongated element in the path between the storage coil 50 and the area in which the festoon 105 is formed.

The detachment of the second service fabric 103 from the elongated element 100 and its deviation towards the second collecting member 70 takes place at a guide member 75 that, in the particular embodiment illustrated in figure 1, acts on the elongated element 100 downstream of the roll R₄.

The guide member 75 comprises a wedge-shaped element 76 pivoted on the upright 17 of the support structure 15. The position of the pivoting axis of the wedge-shaped element 76 is such as to be interposed in height between the roll R₄ and the roll R₇.

The wedge-shaped element 76 is moved between a rest position (highlighted with a broken line in figure 1) in which it is arranged so as not to be in contact with the second service fabric 103 during the unwinding of the elongated element 100 from the storage coil 50 and an operative position (illustrated with a full line in figure 1) in which it comes into contact with the second service fabric 103 of the elongated element 100. Such contact occurs between the roll R₄ and the roll R₅.

The shape of the wedge-shaped element 76 makes easier the detachment and the deviation of the second service fabric 103 from the element made of elastomeric material 101. The second service fabric 103 then proceeds towards the roll R₇ and from here towards the collecting member 70.

The movement of the wedge-shaped element 76 between the rest position and the operative position and keeping it in such an operative position during the unwinding of the elongated element 100 for the detachment of the second service fabric 103 is carried out for example through a pneumatic actuator (not illustrated).

The apparatus 10 further comprises a pressing member 80 acting on the second collecting member 70 in order to compact on such a member the second service fabric 103 being wound.

The pressing member 80 comprises, for this purpose, a roll 81 acting by thrusting against the second collecting member 70. The roll 81 is rotatably mounted at the end of an arm 82 pivoted on the upright 17 and capable of being moved, through a suitable actuator 83 (for example of the pneumatic type), between a rest position (illustrated with a broken line in figure 1) in which it is in a distal position with respect to the second collecting member 70 and an operative position (illustrated with a continuous line in figure 1) in which the roll 81 acts by thrusting on the second service fabric 103 wound on the second collecting member 70.

The apparatus 10 further comprises a first mirror 90 mounted on the upright 17 of the support structure 15 at a lower height than that of the roll R₆. A first photocell 91 points onto such a mirror. The assembly defined by the mirror 90 and the photocell 91 is adapted to provide an indication of the minimum height above which it is wished to keep the festoon 105. In particular, it is detected whether the lower portion 105a of the festoon 105 is at a height equal to or lower than a lower threshold value Hmin.

On the upright 17, above the mirror 90, a second mirror 92 is mounted, said second mirror 92 having a lower portion 92a and an upper portion 92b slightly inclined with respect to the lower portion 92a.

A second photocell 93 points onto the lower portion 92a of the mirror 92. The assembly defined by the lower portion 92a of the mirror 92 and by the photocell 93 is adapted to provide an indication of the maximum height below which it is wished to keep the festoon 105. In particular, it is detected whether the lower portion 105a of the festoon 105 is at a height equal to or greater than an upper threshold value Hmax.

A third photocell 94 points onto the upper portion 92b of the mirror 92. The assembly defined by the upper portion 92b of the mirror 92 and by the photocell 94 is adapted to detect the passage of a tail end of the elongated element 100.

The signals generated by the photocells 91, 93 and 94 are managed by the operation and control unit, which intervenes to stop the unwinding process when the photocell 91 indicates that the festoon 105 is too low (position indicated by a broken line in figure 1), activate or reactivate the unwinding process when the photocell 93 indicates that the festoon 105 is too high (position also indicated by a broken line in figure 1) and end the unwinding process when the photocell 94 indicates the passage of the tail end of the elongated element 100.

At one of the rolls R₁-R₆ an encoder can be arranged to detect the linear unwinding speed of the elongated element 100.

The elongated element 100 used in the present invention can also be of the type illustrated in figure 4. Such an element differs from the one described above and illustrated in figure 2 and 3 only in that the lower first service fabric 102 has a shoulder 102a at each of the opposite side edges thereof. The shoulders 102a act as abutment surfaces for an overlapped turn of the elongated element 100, when the elongated element 100 is wound on the storage coil 50, and for an overlapped turn of the first service fabric 102 when such a fabric is wound on the first collecting member 60.

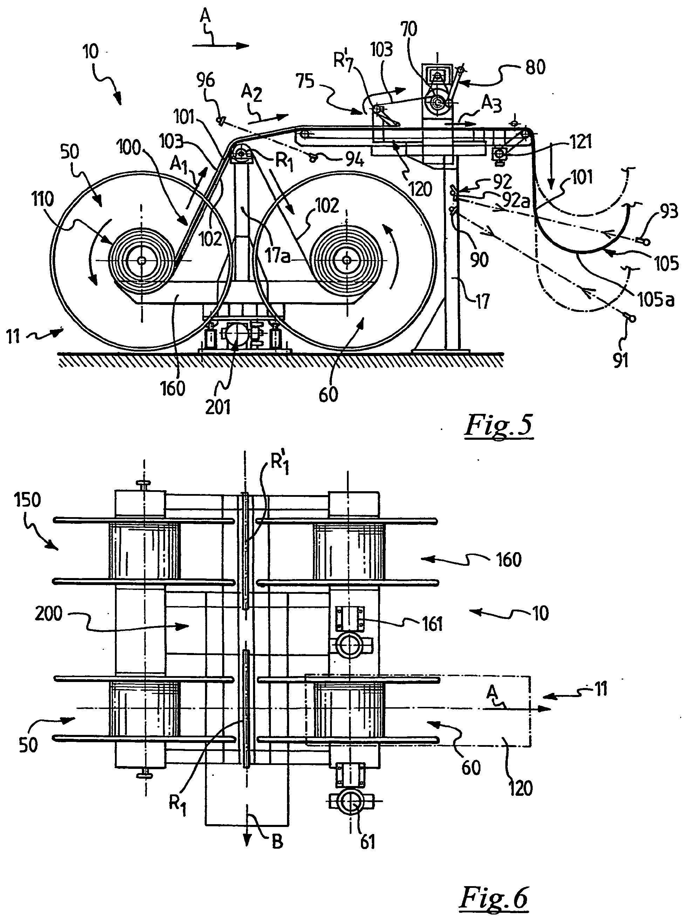

The elongated element 100 of figure 4 is preferably used in the embodiment of the apparatus 10 illustrated in figure 5 and 6.

Such an embodiment differs from the one described above with respect to figure 1 only in the parts described below. Those structural elements of the apparatus 10 of figure 5 and 6 which are the same as or correspond to those described above are indicated with the same reference numeral.

The first collecting member 60 in this case is defined by a coil having dimensions equal or substantially comparable to those of the storage coil 50 of the elongated element 100.

The storage coil 50 and the first collecting member 60 are in this case mounted on a carriage 200 that can be moved, upon command of a motor group 201, along a direction B (figure 6) perpendicular to the unwinding direction A of the elongated element 100.

In the apparatus 10 of figure 5 and 6, the roll R₁ is mounted on an upright 17a fixedly connected to the carriage 200. Such a roll R₁ in turn has an encoder mounted thereon. In a totally analogous way to the embodiment described earlier, also in this case the detachment of the first service fabric 102 from the elongated element 100 occurs at the roll R₁.

In place of the assembly consisting of the rolls R₂-R₅ the apparatus 10 of figure 5 and 6 comprises a conveyor belt 120 fixedly connected to the upright 17 and moved by a suitable motor 121.

In this case, the detachment of the second service fabric 103 and its deviation towards the second collecting member 70 occurs at the conveyor belt 120, through a guide member 75 structurally totally identical to the one described above. Such a member 75 thus acts in a totally analogous way to the guide member 75 of the apparatus 10 of figure 1.

In the apparatus 10 of figure 5 and 6, a roll R'₇ is arranged at the pivoting axis of the guide member 75. Such a roll deviates the second service fabric 103 towards the second collecting member 70, acting in a totally analogous way to the roll R₇ of the apparatus 10 of figure 1.

The photocell 94, which as stated above is adapted to detect the passage of a tail end of the elongated element 100, is in this case arranged so as to point onto a mirror 96 that, unlike the mirrors 90 and 92, is not mounted on the upright 17, but it is arranged upstream of the conveyor belt 120 and downstream of the roll R₁, with respect to the unwinding direction A of the elongated element 100.

A second storage coil 150 of a further elongated element 100, a further collecting member 160 and, between them, a further roll R'₁ are mounted on the carriage 200. The storage coil 150, the further collecting member 160 and the roll R'₁ are totally identical to the storage coil 50, the first collecting member 60 and t the roll R₁, respectively, described above.

A respective motor group 161 that is totally identical to the motor group 61 associated with the first collecting member 60 is associated with the further collecting member 160.

The storage coil 150, the further collecting member 160 and the roll R'₁ are arranged parallel, and in an analogous manner, to the storage coil 50, the first collecting member 60 and the roll R₁ so that, when the carriage 200 is moved along the direction B up to the end of its stroke, the storage coil 50, the first collecting member 60 and the roll R₁ are brought outside of the apparatus 10 and the storage coil 150, the further collecting member 160 and the roll R'₁ respectively take the place previously occupied by the storage coil 50, the first collecting member 60 and the roll R₁. It is thus possible to carry out the unwinding of the elongated element 100 wound on the storage coil 150.

It shall be now described the unwinding process of the elongated element 100 carried out by the apparatus 10 of figure 1 and of figures 5 and 6. Such a process allows, by the feeding of said elongated element 100 in said work station 11, building with such an elongated element 100 at least one portion of the tyre being processed in accordance with the present invention.

At first, the elongated element is pulled manually from the storage coil 50 making it pass over the roll R₁. At this roll the first service fabric 102 is detached, again manually.

In the embodiment of the apparatus 10 of figure 1, the first service fabric 102 is then pulled, again manually, making it pass over the rolls R₂-R₆ until a head end thereof is associated with the first collecting member 60. At this point the motor group 61 is activated for a sufficient time to allow the first service fabric 102 to complete a few turns on the collecting member 60. Simultaneously, the elongated element 100, deprived of the service fabric 102, is passed over the rolls R₂-R₅ and brought into the work position required by the subsequent tyre building process. The guide member 75 is then brought into its operative position and the second service fabric 103 is detached, again manually, downstream of such a member 75, passed over the roll R₇ and brought up to the second collecting member 70, with which a head end of the second service fabric 103 is associated. At this point the motor group associated with the collecting member 70 is activated for a sufficient time to allow the second service fabric 103 to complete a few turns on the second collecting member 70.

In the embodiment of the apparatus 10 of figure 5 (and 6), on the other hand, the first service fabric 102, once detached at the roll R₁ (R'₁), is deviated directly towards the first collecting member 60. In particular, the first service fabric 102 is pulled manually until a head end thereof is associated with the first collecting member 60. At this point the motor group 61 is activated for a sufficient time to allow the first service fabric 102 to complete a few turns on the first collecting member 60. Simultaneously, the elongated element 100 deprived of the first service fabric 102 is positioned on the conveyor belt 120 and brought up to the work position required by the subsequent tyre building process. The guide member 75 is then brought into its operative position and the second service fabric 103 is detached, again manually, downstream of such a member, passed over the roll R'₇ and brought up to the second collecting member 70, with which a head end of the second service fabric 103 is associated. At this point the motor group associated with the collecting member 70 is activated for a sufficient time to allow the second service fabric 103 to complete a few turns on the second collecting member 70.

Once the aforementioned operations have been completed, the apparatus 10 is ready for the automatic actuation of the unwinding process of the present invention. For this purpose, the operation and control unit of the apparatus 10 commands the activation of the motor group 61 and of the motor group associated with the second collecting member 70 (and, in the embodiment of figures 5 and 6, of the motor 121 of the conveyor belt 120).

The automatic unwinding of the elongated element 100 from the storage coil 50 takes place as a result of the pulling action exerted on the first service fabric 102 by the first collecting member 60. During such unwinding, a braking action is exerted on the storage coil 50 in order to ensure a sufficient tensioning of the elongated element 100. The linear unwinding speed of the elongated element 100 is also detected by an encoder.

Basically, both the removal of the service fabrics 102 and 103 from the elongated element 100, and their winding on the respective collecting members 60 and 70, as well as the formation of the festoon 105 of elastomeric material 101, occurs simultaneously with the unwinding of the elongated element 100 from the storage coil 50.

The automatic unwinding described above takes place until the photocell 94 detects the passage of the tail end of the elongated element 100. When this occurs, and in particular after a predetermined delay time suitable for allowing the winding of the service fabrics 102 and 103 onto the respective collecting members 60 and 70 to be completed, the operation and control unit of the apparatus 10 stops the motor group 61 and the motor group associated with the second collecting member 70 (and, in the embodiment of figures 5 and 6, the motor 121 of the conveyor belt 120), thus putting an end to the unwinding process.

The automatic unwinding described above is stopped when the photocell 91 detects that the lower portion 105a of the festoon 105 of the element made of elastomeric material 101 reaches the lower threshold value Hmin. In this circumstance, the operation and control unit of the apparatus 10 commands the temporary stopping of the unwinding of the elongated element 10, stopping the motor group 61 and the motor group associated with the second collecting member 70 (and, in the embodiment of figures 5 and 6, the motor 121 of the conveyor belt 120).

While the apparatus 10 is in a temporary stop condition, the element made of elastomeric material 101 of the festoon 105 is fed to the tyre building process. The apparatus 10 stays in the stop condition until the photocell 93 detects that the lower portion 105a of the festoon 105 of the element made of elastomeric material 101 reaches the upper threshold value Hmax. In this circumstance, the operation and control unit of the apparatus 10 commands the restarting of the unwinding of the elongated element 100, reactivating the motor group 61 and the motor group associated with the second collecting member 70 (and, in the embodiment of figures 5 and 6, the motor 121 of the conveyor belt 120).

With respect to the apparatus 10 of figure 5 and 6, during the unwinding of the elongated element 100 from the storage coil 50, the storage coil 150 and the further collecting member 160 are mounted on the carriage 200, on opposite sides with respect to the roll R'₁, and the manual operations described below are carried out.

The elongated element 100 wound on the storage coil 150 is pulled manually making it pass over the roll R'₁. At this roll the first service fabric 102 is detached, again manually, and is pulled manually until a head end thereof is associated with the further collecting member 160. At this point the motor group 161 is activated for a sufficient time to allow the first service fabric 102 to complete a few turns on the further collecting member 160.

Once the unwinding of the elongated element 100 wound on the storage coil 50 has been completed, the carriage 200 is moved along the direction B until the storage coil 150, the further collecting member 160 and the roll R'₁ are brought into the position previously occupied by the storage coil 50, the first collecting member 60 and the roll R₁, respectively.

It is then possible to start the unwinding of the elongated element 100 wound on the storage coil 150, operating in a totally analogous way to what has been described above with respect to the unwinding of the elongated element 100 wound on the storage coil 50.

During the unwinding of the elongated element 100 wound on the storage coil 150, the storage coil 50 and the first collecting member 60 are removed from the carriage and replaced with a new storage coil and with a new collecting member of the first service fabric 102. The unwinding of the elongated element 100 wound on such a new storage coil will take place at the end of the unwinding of the elongated element 100 wound on the storage coil 150, repeating the operations described above.

Of course, a man skilled in the art can make further changes and variants to the invention described above in order to satisfy specific and contingent application requirements, these changes and variants in any case falling within the scope of protection defined by the following claims.

## Claims

1. Process for unwinding an elongated element (100) in order to build at least one portion of a tyre being processed, said elongated element (100) being provided with a first service fabric (102) and a second service fabric (103) and being arranged wound on a first storage coil (50), the process comprising:
a) unwinding the elongated element (100) from said first storage coil (50);
b) removing said first service fabric (102) and second service fabric (103) from said elongated element (100);
c) collecting each of said first service fabric (102) and second service fabric (103) on a first collecting member (60) and on a second collecting member (70), respectively; wherein the removal and collection of said first service fabric (102) and second service fabric (103) occur during the unwinding of the elongated element (100) from said first storage coil (50);
wherein removing the second service fabric (103) comprises arranging a pivotally movable wedge-shaped element (76) at an operative position in which it contacts the second service fabric (103).

2. Process according to claim 1, wherein the unwinding of the elongated element (100) occurs as a result of a pulling action exerted on said first service fabric (102).

3. Process according to claim 2, wherein said first service fabric (102) is associated with a base surface (101a) of said elongated element (100).

4. Process according to claim 3, wherein said second service fabric (103) is associated with a top surface (101b) of said elongated element (100).

5. Process according to any one of claims 2 to 4, wherein said first collecting member (60) is motorized.

6. Process according to claim 5, wherein said pulling action is exerted by driving said first collecting member (60) in rotation.

7. Process according to claims 5 or 6, comprising, during the unwinding of said elongated element (100):
- detecting the passage of a tail end of said elongated element (100);
- stopping said first collecting member (60) after a predetermined time from said detection.

8. Process according to any one of the previous claims, wherein the removal of said first service fabric (102) and second service fabric (103) comprises guiding said first service fabric (102) and said second service fabric (103) towards said first collecting member (60) and second collecting member (70).

9. Process according to any one of the previous claims, wherein the unwinding of said elongated element (100) from said first storage coil (50) further comprises exerting a braking action on said first storage coil (50).

10. Process according to any one of the previous claims, wherein the unwinding of the elongated element (100) from said first storage coil (50) comprises detecting the height at which the portion of elongated element (100) from which the first service fabric (102) and the second service fabric (103) have been removed is.

11. Process according to claim 10, wherein the unwinding of the elongated element (100) from said first storage coil (50) further comprises stopping the unwinding of said elongated element (100) when said height reaches a lower threshold value (Hmin).

12. Process according to claim 11, further comprising: restarting the unwinding of said elongated element (100) when said height reaches a higher threshold value (Hmax).

13. Process according to any one of the previous claims, wherein the unwinding of the elongated element (100) from said first storage coil (50) comprises detecting the linear unwinding speed of said elongated element (100).

14. Process according to any one of the previous claims, comprising:
- positioning a second storage coil (150) of a further elongated element (100) in line with a further collecting member (160), with respect to the unwinding direction (A) of said further elongated element (100), said further elongated element (100) being provided with said first service fabric (102) and second service fabric (103), said further collecting member (160) being adapted to collect the first service fabric (102) of said further elongated element (100).

15. Process for building tyres comprising:
i) feeding an elongated element (100), provided with a first service fabric (102) and a second service fabric (103), to at least one work station (11), said elongated element (100) being arranged wound on a first storage coil (50) ;
ii) building in said at least one work station (11) at least one portion of a tyre by means of said elongated element (100);
wherein said feeding comprises unwinding the elongated element (100) from said first storage coil (50) according to the process of any one of claims 1-14.

16. Apparatus (10) for unwinding an elongated element (100) in order to build at least one portion of a tyre being processed, said elongated element (100) being provided with a first service fabric (102) and a second service fabric (103), the apparatus (10) comprising:
- a first storage coil (50) of said elongated element (100);
- a first collecting member (60) of said first service fabric (102) of said elongated element (100);
- a second collecting member (70) of said second service fabric (103) of said elongated element (100);
said first storage coil (50), first collecting member (60) and second collecting member (70) being operatively associated with each other so that the removal and collection of said first service fabric (102) and second service fabric (103) occur during the unwinding of the elongated element (100) from said first storage coil (50);
- a wedge-shaped element (76) pivotally movable between a rest position in which it is arranged so as not to be in contact with the second service fabric (103) during unwinding of the elongated element (100) from the first storage coil (50) and an operative position in which it comes into contact with the second service fabric (103) for detaching the second service fabric (103) from the elongated element (100).

17. Apparatus (10) according to claim 16, comprising a device (94, 92b; 94, 96) for detecting the passage of a tail end of said elongated element (100).

18. Apparatus (10) according to claim 16 or 17, comprising at least one first roll (R₁-R₆; R'₁) for deviating said first service fabric (102), said roll being operatively arranged between said first storage coil (50) and said first collecting member (60).

19. Apparatus (10) according to any one of claims 16 to 18, comprising at least one second roll (R₇; R'₇) for deviating said second service fabric (103), said roll being operatively arranged between said first storage coil (50) and said second collecting member (70).

20. Apparatus (10) according to any one of claims 16 to 19, comprising at least one pressing member (80, 81, 82, 83) acting on at least one of said first collecting member (60) and second collecting member (70).

21. Apparatus (10) according to any one of claims 16 to 20, comprising at least one device (90, 91) for detecting the height at which the portion of elongated element (100) from which the first service fabric (102) and the second service fabric (103) have been removed is.

22. Apparatus (10) according to any one of claims 16 to 21, comprising an encoder arranged downstream of said first storage coil (50) and adapted to detect the linear unwinding speed of said elongated element (100).

23. Apparatus (10) according to any one of claims 16 to 22, wherein said first storage coil (50), said first collecting member (60) and said second collecting member (70) are arranged in line with respect to the unwinding direction (A) of said elongated element (100) and wherein said first storage coil (50) and said first collecting member (60) are mounted on a carriage (200) which can be moved perpendicularly to the unwinding direction (A) of said elongated element.

24. Apparatus (10) according to claim 23, comprising:
- a second storage coil (150) mounted on said carriage (200) at a side of said first storage coil (50);
- a further collecting member (160) mounted on said carriage (200) at a side of said first collecting member (60).

25. Plant for building tyres for vehicle wheels, comprising at least one work station (11) wherein at least one portion of a tyre is built by means of an elongated element (100) provided with a first service fabric (102) and with a second service fabric (103), said elongated element (100) being fed by an apparatus (10) operatively associated with said at least one work station (11), said apparatus (10) comprising the features recites in any one of claims 16-24.

## Patentansprüche

1. Verfahren zum Abwickeln eines länglichen Elements (100) zur Herstellung zumindest eines Abschnitts eines zu verarbeitenden Reifens, wobei das längliche Element (100) mit einem ersten Hilfsgewebe (102) und einem zweiten Hilfsgewebe (103) versehen ist und auf einer ersten Lagerrolle (50) aufgewickelt angeordnet ist, wobei das Verfahren die folgenden Schritte umfasst:
a) Abwickeln des länglichen Elements (100) von der ersten Lagerrolle (50);
b) Entfernen des ersten Hilfsgewebes (102) und des zweiten Hilfsgewebes (103) von dem länglichen Element (100);
c) Aufnehmen des ersten Hilfsgewebes (102) und des zweiten Hilfsgewebes (103) jeweils auf einem ersten Aufnahmeelement (60) und auf einem zweiten Aufnahmeelement (70);
wobei das Entfernen und Aufnehmen des ersten Hilfsgewebes (102) und des zweiten Hilfsgewebes (103) während des Abwickelns des länglichen Elements (100) von der ersten Lagerrolle (50) erfolgt;
wobei das Entfernen des zweiten Hilfsgewebes (103) das Anordnen eines schwenkbar beweglichen keilförmigen Elements (76) in einer Betriebsstellung umfasst, in der es mit dem zweiten Hilfsgewebe (103) in Kontakt steht.

2. Verfahren nach Anspruch 1, wobei das Abwickeln des länglichen Elements (100) als Ergebnis einer Zugwirkung erfolgt, die auf das erste Hilfsgewebe (102) ausgeübt wird.

3. Verfahren nach Anspruch 2, wobei das erste Hilfsgewebe (102) einer Grundfläche (101a) des länglichen Elements (100) zugeordnet ist.

4. Verfahren nach Anspruch 3, wobei das zweite Hilfsgewebe (103) einer oberen Oberfläche (101b) des länglichen Elements (100) zugeordnet ist.

5. Verfahren nach einem der Ansprüche 2 bis 4, wobei das erste Aufnahmeelement (60) motorisiert ist.

6. Verfahren nach Anspruch 5, wobei die Zugwirkung ausgeübt wird, indem das erste Aufnahmeelement (60) in Drehung versetzt wird.

7. Verfahren nach den Ansprüchen 5 oder 6, das während des Abwickelns des länglichen Elements (100) folgende Schritte umfasst:
- Erfassen des Durchgangs eines Endstücks des länglichen Elements (100);
- Stoppen des ersten Aufnahmeelements (60) nach einer vorbestimmten Zeit auf die Erfassung folgend.

8. Verfahren nach einem der vorhergehenden Ansprüche, wobei das Entfernen des ersten Hilfsgewebes (102) und des zweiten Hilfsgewebes (103) das Führen des ersten Hilfsgewebes (102) und des zweiten Hilfsgewebes (103) zu dem ersten Aufnahmeelement (60) und dem zweiten Aufnahmeelement (70) hin umfasst.

9. Verfahren nach einem der vorhergehenden Ansprüche, wobei das Abwickeln des länglichen Elements (100) von der ersten Lagerrolle (50) des Weiteren das Ausüben einer Bremswirkung auf die erste Lagerrolle (50) umfasst.

10. Verfahren nach einem der vorhergehenden Ansprüche, wobei das Abwickeln des länglichen Elements (100) von der ersten Lagerrolle (50) das Erfassen der Höhe umfasst, in der sich der Abschnitt des länglichen Elements (100) befindet, von dem das erste Hilfsgewebe (102) und das zweite Hilfsgewebe (103) entfernt wurden.

11. Verfahren nach Anspruch 10, wobei das Abwickeln des länglichen Elements (100) von der ersten Lagerrolle (50) des Weiteren das Stoppen des Abwickelns des länglichen Elements (100) umfasst, wenn die Höhe einen unteren Schwellenwert (Hmin) erreicht.

12. Verfahren nach Anspruch 11, des Weiteren umfassend das erneute Starten des Abwickelns des länglichen Elements (100), wenn die Höhe einen oberen Schwellenwert (Hmax) erreicht.

13. Verfahren nach einem der vorhergehenden Ansprüche, wobei das Abwickeln des länglichen Elements (100) von der ersten Lagerrolle (50) das Erfassen der linearen Abwickelgeschwindigkeit des länglichen Elements (100) umfasst.

14. Verfahren nach einem der vorhergehenden Ansprüche, umfassend die folgenden Schritte:
- Positionieren einer zweiten Lagerrolle (150) für ein zweites längliches Element (100) in einer Linie mit einem weiteren Aufnahmeelement (160) in Bezug auf die Abwickelrichtung (A) des weiteren länglichen Elements (100), wobei das weitere längliche Element (100) mit dem ersten Hilfsgewebe (102) und dem zweiten Hilfsgewebe (103) versehen ist, wobei das weitere Aufnahmeelement (160) dazu geeignet ist, das erste Hilfsgewebe (102) des weiteren länglichen Elements (100) aufzunehmen.

15. Verfahren zur Herstellung von Reifen, das die folgenden Schritte umfasst:
i) Zuführen eines länglichen Elements (100), das mit einem ersten Hilfsgewebe (102) und einem zweiten Hilfsgewebe (103) versehen ist, an zumindest eine Arbeitsstation (11), wobei das längliche Element (100) auf eine erste Lagerrolle (50) aufgewickelt angeordnet ist;
ii) Herstellen zumindest eines Abschnitts eines Reifens in der zumindest einen Arbeitsstation (11) mittels des länglichen Elements (100);
wobei das Zuführen das Abwickeln des länglichen Elements (100) von der ersten Lagerrolle (50) in Übereinstimmung mit dem Verfahren nach einem der Ansprüche 1 bis 14 umfasst.

16. Vorrichtung (10) zum Abwickeln eines länglichen Elements (100) zur Herstellung zumindest eines Abschnitts eines zu verarbeitenden Reifens, wobei das längliche Element (100) mit einem ersten Hilfsgewebe (102) und einem zweiten Hilfsgewebe (103) versehen ist, wobei die Vorrichtung (10) umfasst:
- eine erste Lagerrolle (50) mit dem länglichen Element (100);
- ein erstes Aufnahmeelement (60) für das erste Hilfsgewebe (102) des länglichen Elements (100);
- ein zweites Aufnahmeelement (70) für das zweite Hilfsgewebe (103) des länglichen Elements (100);
wobei die erste Lagerrolle (50), das erste Aufnahmeelement (60) und das zweite Aufnahmeelement (70) einander operativ zugeordnet sind, so dass das Entfernen und Aufnehmen des ersten Hilfsgewebes (102) und des zweiten Hilfsgewebes (103) während des Abwickelns des länglichen Elements (100) von der ersten Lagerrolle (50) erfolgt;
- ein keilförmiges Element (76), das zwischen einer Ruhestellung, in der es so angeordnet ist, dass es während des Abwickelns des länglichen Elements (100) von der ersten Lagerrolle (50) nicht mit dem zweiten Hilfsgewebe (103) in Kontakt steht, und einer Betriebsstellung, in der es mit dem zweiten Hilfsgewebe (103) in Kontakt steht, um das zweite Hilfsgewebe (103) von dem länglichen Element (100) abzulösen, schwenkbar beweglich ist.

17. Vorrichtung (10) nach Anspruch 16, umfassend eine Einrichtung (94, 92b; 94, 96) zum Erfassen des Durchgangs eines Endstücks des länglichen Elements (100).

18. Vorrichtung (10) nach Anspruch 16 oder 17, umfassend zumindest eine erste Rolle (R₁ - R₆; R'₁) zur Umlenkung des ersten Hilfsgewebes (102), wobei die Rolle operativ zwischen der ersten Lagerrolle (50) und dem ersten Aufnahmeelement (60) angeordnet ist.

19. Vorrichtung (10) nach einem der Ansprüche 16 bis 18, die zumindest eine zweite Rolle (R₇; R'₇) zur Umlenkung des zweiten Hilfsgewebes (103), wobei die Rolle operativ zwischen der ersten Lagerrolle (50) und dem zweiten Aufnahmeelement (70) angeordnet ist.

20. Vorrichtung (10) nach einem der Ansprüche 16 bis 19, umfassend zumindest ein Andrückelement (80, 81, 82, 83), das zumindest auf das erste Aufnahmeelement (60) und/oder das zweite Aufnahmeelement (70) wirkt.

21. Vorrichtung (10) nach einem der Ansprüche 16 bis 20, umfassend zumindest eine Einrichtung (90, 91) zur Erfassung der Höhe, in der sich der Abschnitt des länglichen Elements (100) befindet, von dem das erste Hilfsgewebe (102) und das zweite Hilfsgewebe (103) entfernt wurden.

22. Vorrichtung (10) nach einem der Ansprüche 16 bis 21, umfassend einen Kodierer, der stromabwärts der ersten Lagerrolle (50) angeordnet und dazu geeignet ist, die lineare Abwickelgeschwindigkeit des länglichen Elements (100) zu erfassen.

23. Vorrichtung (10) nach einem der Ansprüche 16 bis 22, wobei die erste Lagerrolle (50), das erste Aufnahmeelement (60) und das zweite Aufnahmeelement (70) in Bezug auf die Abwicklungsrichtung (A) des länglichen Elements (100) in einer Linie angeordnet sind, und wobei die erste Lagerrolle (50) und das erste Aufnahmeelement (60) auf einem Schlitten (200) montiert sind, der senkrecht auf die Abwicklungsrichtung (A) des länglichen Elements bewegt werden kann.

24. Vorrichtung (10) nach Anspruch 23, die Folgendes umfasst:
- eine zweite Lagerrolle (150), die auf dem Schlitten (200) an einer Seite der ersten Lagerrolle (50) montiert ist;
- ein weiteres Aufnahmeelement (160), das auf dem Schlitten (200) an einer Seite des ersten Aufnahmeelements (60) angeordnet ist.

25. Anlage zur Herstellung von Reifen für Fahrzeugräder, umfassend zumindest eine Arbeitsstation (11), in der zumindest ein Abschnitt eines Reifens mittels des länglichen Elements (100), das mit einem ersten Hilfsgewebe (102) und einem zweiten Hilfsgewebe (103) versehen ist, hergestellt wird, wobei das längliche Element (100) durch eine Vorrichtung (10) zugeführt wird, der operativ der zumindest einen Arbeitsstation (11) zugeordnet ist, wobei die Vorrichtung (10) die Merkmale nach einem der Ansprüche 16 bis 24 umfasst.

## Revendications

1. Procédé pour dérouler un élément allongé (100) afin de construire au moins une partie d'un pneu en cours de traitement, ledit élément allongé (100) étant muni d'un premier tissu de service (102) et d'un deuxième tissu de service (103) et étant agencé de manière enroulée sur une première bobine de stockage (50), le procédé comprenant le fait :
a) de dérouler l'élément allongé (100) à partir de ladite première bobine de stockage (50) ;
b) de retirer ledit premier tissu de service (102) et ledit deuxième tissu de service (103) dudit élément allongé (100) ;
c) de collecter chacun dudit premier tissu de service (102) et dudit deuxième tissu de service (103) sur un premier élément de collecte (60) et sur un deuxième élément de collecte (70), respectivement ;
dans lequel le retrait et la collecte dudit premier tissu de service (102) et dudit deuxième tissu de service (103) se produisent au cours du déroulement de l'élément allongé (100) à partir de ladite première bobine de stockage (50) ;
dans lequel le retrait du deuxième tissu de service (103) comprend le fait d'agencer un élément en forme de coin mobile de manière pivotante (76) à une position de fonctionnement dans laquelle il entre en contact avec le deuxième tissu de service (103).

2. Procédé selon la revendication 1, dans lequel le déroulement de l'élément allongé (100) se produit à la suite d'une action de traction exercée sur ledit premier tissu de service (102).

3. Procédé selon la revendication 2, dans lequel ledit premier tissu de service (102) est associé à une surface de base (101a) dudit élément allongé (100).

4. Procédé selon la revendication 3, dans lequel ledit deuxième tissu de service (103) est associé à une surface supérieure (101b) dudit élément allongé (100).

5. Procédé selon l'une quelconque des revendications 2 à 4, dans lequel ledit premier élément de collecte (60) est motorisé.

6. Procédé selon la revendication 5, dans lequel ladite action de traction est exercée par l'entraînement en rotation dudit premier élément de collecte (60).

7. Procédé selon la revendication 5 ou 6, comprenant, au cours du déroulement dudit élément allongé (100), le fait :
- de détecter le passage d'une extrémité arrière dudit élément allongé (100) ;
- d'arrêter ledit premier élément de collecte (60) après un temps prédéterminé à partir de ladite détection.

8. Procédé selon l'une quelconque des revendications précédentes, dans lequel le retrait dudit premier tissu de service (102) et dudit deuxième tissu de service (103) comprend le fait de guider ledit premier tissu de service (102) et ledit deuxième tissu de service (103) vers ledit premier élément de collecte (60) et vers ledit deuxième élément de collecte (70).

9. Procédé selon l'une quelconque des revendications précédentes, dans lequel le déroulement de l'élément allongé (100) à partir de ladite première bobine de stockage (50) comprend en outre le fait d'exercer une action de freinage sur ladite première bobine de stockage (50).

10. Procédé selon l'une quelconque des revendications précédentes, dans lequel le déroulement de l'élément allongé (100) à partir de ladite première bobine de stockage (50) comprend le fait de détecter la hauteur à laquelle se trouve la partie de l'élément allongé (100) duquel le premier tissu de service (102) et le deuxième tissu de service (103) ont été retirés.

11. Procédé selon la revendication 10, dans lequel le déroulement de l'élément allongé (100) à partir de ladite première bobine de stockage (50) comprend en outre le fait d'arrêter le déroulement dudit élément allongé (100) lorsque ladite hauteur atteint une valeur seuil inférieure (Hmin).

12. Procédé selon la revendication 11, comprenant en outre le fait : de redémarrer le déroulement dudit élément allongé (100) lorsque ladite hauteur atteint une valeur seuil supérieure (Hmax).

13. Procédé selon l'une quelconque des revendications précédentes, dans lequel le déroulement de l'élément allongé (100) à partir de ladite première bobine de stockage (50) comprend le fait de détecter la vitesse de déroulement linéaire dudit élément allongé (100).

14. Procédé selon l'une quelconque des revendications précédentes, comprenant le fait :
- de positionner une deuxième bobine de stockage (150) d'un élément allongé supplémentaire (100) en ligne avec un élément de collecte supplémentaire (160), par rapport à la direction de déroulement (A) dudit élément allongé supplémentaire (100), ledit élément allongé supplémentaire (100) étant muni dudit premier tissu de service (102) et dudit deuxième tissu de service (103), ledit élément de collecte supplémentaire (160) étant adapté pour collecter le premier tissu de service (102) dudit élément allongé supplémentaire (100).

15. Procédé pour construire des pneus comprenant le fait :
i) d'acheminer un élément allongé (100), muni d'un premier tissu de service (102) et d'un deuxième tissu de service (103), vers au moins une station de travail (11), ledit élément allongé (100) étant agencé de manière enroulée sur une première bobine de stockage (50) ;
ii) de construire dans ladite au moins une station de travail (11) au moins une partie d'un pneu au moyen dudit élément allongé (100) ;
dans lequel ledit acheminement comprend le fait de dérouler l'élément allongé (100) à partir de ladite première bobine de stockage (50) selon le procédé de l'une quelconque des revendications 1 à 14.

16. Appareil (10) pour dérouler un élément allongé (100) afin de construire au moins une partie d'un pneu en cours de traitement, ledit élément allongé (100) étant muni d'un premier tissu de service (102) et d'un deuxième tissu de service (103), l'appareil (10) comprenant :
- une première bobine de stockage (50) dudit élément allongé (100) ;
- un premier élément de collecte (60) dudit premier tissu de service (102) dudit élément allongé (100) ;
- un deuxième élément de collecte (70) dudit deuxième tissu de service (103) dudit élément allongé (100) ;
ladite première bobine de stockage (50), ledit premier élément de collecte (60) et ledit deuxième élément de collecte (70) étant associés de manière fonctionnelle les uns aux autres de sorte que le retrait et la collecte dudit premier tissu service (102) et dudit deuxième tissu de service (103) se produisent au cours du déroulement de l'élément allongé (100) à partir de ladite première bobine de stockage (50) ;
- un élément en forme de coin (76) mobile de manière pivotante entre une position de repos dans laquelle il est agencé de manière à ne pas entrer en contact avec le deuxième tissu service (103) au cours du déroulement de l'élément allongé (100) à partir de la première bobine de stockage (50) et une position de fonctionnement dans laquelle il entre en contact avec le deuxième tissu de service (103) pour détacher le deuxième tissu de service (103) de l'élément allongé (100).

17. Appareil (10) selon la revendication 16, comprenant un dispositif (94, 92b ; 94, 96) pour détecter le passage d'une extrémité arrière dudit élément allongé (100).

18. Appareil (10) selon la revendication 16 ou 17, comprenant au moins un premier rouleau (R₁-R₆ ; R'₁) pour faire dévier ledit premier tissu de service (102), ledit rouleau étant agencé de manière fonctionnelle entre ladite première bobine de stockage (50) et ledit premier élément de collecte (60).

19. Appareil (10) selon l'une quelconque des revendications 16 à 18, comprenant au moins un deuxième rouleau (R₇ ; R'₇) pour faire dévier ledit deuxième tissu de service (103), ledit rouleau étant agencé de manière fonctionnelle entre ladite première bobine de stockage (50) et ledit deuxième élément de collecte (70).

20. Appareil (10) selon l'une quelconque des revendications 16 à 19, comprenant au moins un élément de pression (80, 81, 82, 83) agissant sur au moins l'un dudit premier élément de collecte (60) et dudit deuxième élément de collecte (70).

21. Appareil (10) selon l'une quelconque des revendications 16 à 20, comprenant au moins un dispositif (90, 91) pour détecter la hauteur à laquelle se trouve la partie de l'élément allongé (100) duquel le premier tissu de service (102) et le deuxième tissu de service (103) ont été retirés.

22. Appareil (10) selon l'une quelconque des revendications 16 à 21, comprenant un codeur agencé en aval de ladite première bobine de stockage (50) et adapté pour détecter la vitesse de déroulement linéaire dudit élément allongé (100).

23. Appareil (10) selon l'une quelconque des revendications 16 à 22, dans lequel ladite première bobine de stockage (50), ledit premier élément de collecte (60) et ledit deuxième élément de collecte (70) sont agencés en ligne par rapport à la direction de déroulement (A) dudit élément allongé (100) et où ladite première bobine de stockage (50) et ledit premier élément de collecte (60) sont montés sur un chariot (200) qui peut être déplacé perpendiculairement à la direction de déroulement (A) dudit élément allongé.

24. Appareil (10) selon la revendication 23, comprenant :
- une deuxième bobine de stockage (150) montée sur ledit chariot (200) au niveau d'un côté de ladite première bobine de stockage (50) ;
- un élément de collecte supplémentaire (160) monté sur ledit chariot (200) au niveau d'un côté dudit premier élément de collecte (60).

25. Installation pour construire des pneus pour roues de véhicule, comprenant au moins une station de travail (11) où au moins une partie d'un pneu est construite au moyen d'un élément allongé (100) muni d'un premier tissu de service (102) et d'un deuxième tissu de service (103), ledit élément allongé (100) étant acheminé par un appareil (10) associé de manière fonctionnelle à ladite au moins une station de travail (11), ledit appareil (10) comprenant les caractéristiques décrites dans l'une quelconque des revendications 16 à 24.
